Europäisches Patentamt

European Patent Office

Office européen des brevets

(11) Veröffentlichungsnummer: **0 233 444**

**A1**

(12) **EUROPÄISCHE PATENTANMELDUNG**

(21) Anmeldenummer: **86890038.2**

(22) Anmeldetag: **19.02.86**

(51) Int. Cl.⁴: **H02H 3/33** , H02H 1/06

(43) Veröffentlichungstag der Anmeldung:
**26.08.87** Patentblatt **87/35**

(84) Benannte Vertragsstaaten:
**FR GB IT**

(71) Anmelder: **Schrack**
**Elektronik-Aktiengesellschaft**
**Pottendorferstrasse 25-27**
**A-1120 Wien(AT)**

(72) Erfinder: **Webley, Philip, Dipl.-Ing.**
**Hardeggasse 67/8/2/8**
**A-1220 Wien(AT)**

(74) Vertreter: **Gibler, Ferdinand, Dipl.Ing.Dr.tech.**
**Dorotheergasse 7/14**
**A-1010 Wien(AT)**

(54) Schaltungsanordnung zur Steuerung einer Netz-Schalteinrichtung.

(57) Schaltungsanorndung zur Steuerung einer Netz-Schalteinrichtung, vorzugsweise eines elektromagnetischen Schalters, wie z.B. eines Fehlerstromschutzschalters, wobei eine für die Netz-Schalteinrichtung vorgesehene Ansteuerschaltung von von einer über einen Gleichrichter mit Gleichstrom versorgten Auswerteschaltung erzeugten Signalen gesteuert ist, wobei die Netz-Schaltung 18 bzw. eine Steuerschaltung derselben in der Wechselstromanspeisung des Gleichrichters 2, der vorzugsweise als Gleichrichterbrücke ausgebildet ist, in Serie geschaltet ist und dessen Gleichstromkreis die Ansteuerschaltung 51 und die Auswerteschaltung 50 versorgt.

Fig. 1

## Schaltungsanordnung zur Steuerung einer Netz-Schalteinrichtung

Die Erfindung bezieht sich auf eine Schaltungsanordnung zur Steuerung einer Netz-Schalteinrichtung, vorzugsweise eines elektromagnetischen Schalters wie z. B. eines Fehlerstrom schutzschalters, wobei eine für die Netz-Schalteintungvorgesehene Ansteuerschaltung von von einer über einen Gleichrichter mit Gleichstrom versorgten Auswerteschaltung erzeugten Signalen gesteuert ist.

Bei bekannten derartigen Schaltungen liegt die Ansteuerschaltung in Serie zur Netz-Schalteinrichtung und ist an die Wechselstromversorgung angeschlossen, an der auch der Gleichrichter angeschlossen ist, der die Auswerteschaltung versorgt.

In Fällen bei denen die Netz-Schalteinrichtung in Abhängigkeit von relativ kurzen von der Auswerteschaltung erfassten Signalen geschaltet werden soll, ergibt sich das Problem, daß die Auswerteschaltung ihren durch ein Signal von oft nur kurzer Dauer eingenommenen Ausgangszustand oft über lange Zeit aufrecht erhalten muß. Dazu sind entsprechende schaltungstechnische Maßnahmen erforderlich, die einen entsprechenden Aufwand verursachen.

Ziel der Erfindung ist es, diese Nachteile zu vermeiden.

Erfindungsgemäß wird daher vorgeschlagen, daß die Netzschalteinrichtung bzw. eine Steuerschaltung derselben in der Wechselstromanspeisung des Gleichrichters, der vorzugsweise als Gleichrichterbrücke ausgebildet ist, in Serie geschaltet ist und dessen Gleichstromkreis die Ansteuerschaltung und die Auswerteschaltung versorgt.

Auf diese Weise ist es bei entsprechender Ausbildung der Ansteuerschaltung, z.B. mit einem Thyristor, möglich, eine Netzschalteinrichtung durch ein kurzes Signal einzuschalten und diesen Zustand über eine beliebig lange Zeit aufrecht zu erhalten. Die Abschaltung der Netz-Schalteinrichtung, die z.B. durch eine Warn-oder Schutzeinrichtung gebildet sein kann,kann z.B. durch einen im Wechselstromkreis angeordneten Taster erfolgen, der den Gleichrichter von der Wechselstromversorgung trennt.

Bei Schutzeinrichtungen, z.B. einem Fehlerstromschutzschalter, besteht auch die Möglichkeit, daß diese bei ihrer Auslösung auch gleichzeitig die Versorgung des Gleichrichters mit Wechselstrom unterbricht.

Nach einem weiteren Merkmal der Erfindung ist vorgesehen, daß die Steuerschaltung stromgesteuert ist. Dabei kann weiters vorgesehen sein, daß die Steuerschaltung durch die Spule eines Kontakte steuernden Elektromagneten gebildet ist, wobei vorzugsweise einer dieser Kontakte in Serie zur Spule geschaltet und als Öffner ausgebildet ist. Diese Maßnahmen eignen sich besonders für eine Schutzeinrichtung, wobei im Fall einer Auslösung bzw. nach erfolgter Auslösung die Versorgung des Gleichrichters unterbrochen wird und so die Schaltung in ihren Ruhezustand zurückkehrt. Dabei kann selbsverständlich eine mechanische Verriegelung vorgesehen sein, die den Elektromagneten in seinem angezogenen Zustand hält auch wenn die Spule nicht mehr vom Strom durchflossen ist, solange die Verriegelung nicht durch eine entsprechende Ansteuerung oder von Hand aus zurückgesetzt wird. Die Erfindung wird nun an Hand der Zeichnung näher erläutert.

Dabei zeigt:

Fig.1 ein Blockschaltbild einer erfindungsgemäßen Schaltung und

Fig.2 einen Fehlerstromschutzschalter nach der Erfindung.

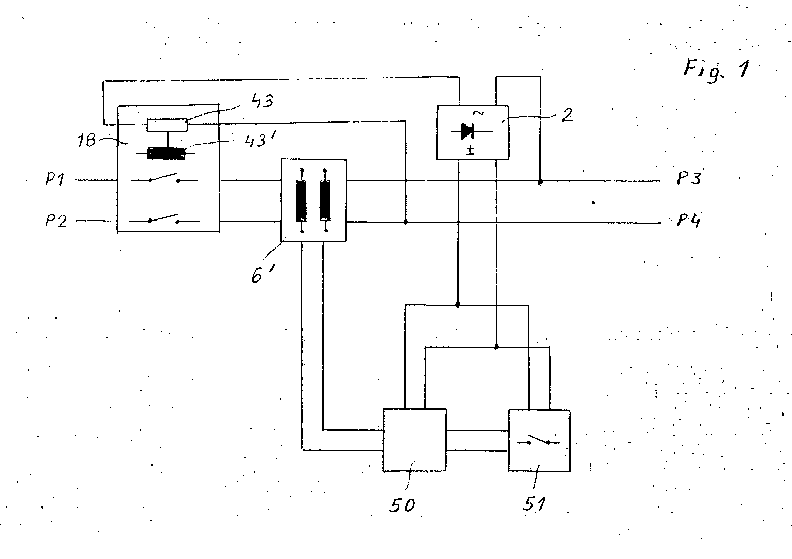

Wie aus Fig.1 ersichtlich, ist der Gleichrichter 2, der zweckmäßiger Weise als Gleichrichterbrücke ausgebildet ist, wechselstromseitig über eine Steuerschaltung z.B. eine einen Eisenkern 43' umgebene Spule 43, mit Wechselstrom führenden Leitungen P1-P3 und P2-P4 verbunden und versorgt gleichstromseitig eine Auswerteschaltung 50, welche die von der Signalquelle 6', die z.B. als ein Summenstromwandler ausgebildet ist, kommenden Signale auswertet und bei Erfüllung eines entsprechenden Auslösekriteriums einen Auslösebefehl an die Ansteuerschalung 51 abgibt, die ebenfalls mit den Gleichstromausgängen des Gleichrichters 2 verbunden ist.

Da die Auswerteschaltung 50 und gegebenenfalls auch die Ansteuerschaltung 51 einen geringen Stromverbrauch aufweisen, fließt auch über die Steuerschaltung 43 bzw. die Netz-Schalteinrichtung im Ruhezustand ein geringer Strom, der aber keinesfalls ausreicht um den Eisenkern 43' in einem für einen Schaltvorgang ausreichenden Maße zu erregen. Falls aber die Auswerteschaltung einen Auslösebefehl gibt, so zieht die Ansteuerschaltung 51, die z.B. durch einen Thyristor gebildet sein kann, einen hohen Strom, sodaß auch über die Steuerschaltung 43 ein entsprechend hoher Strom fließt und der Eisenkern 43' in einem für das Schalten der vom Eisenkern gesteuerten Schalter bzw. Kontakt ausreichendem Maße erregt wird.

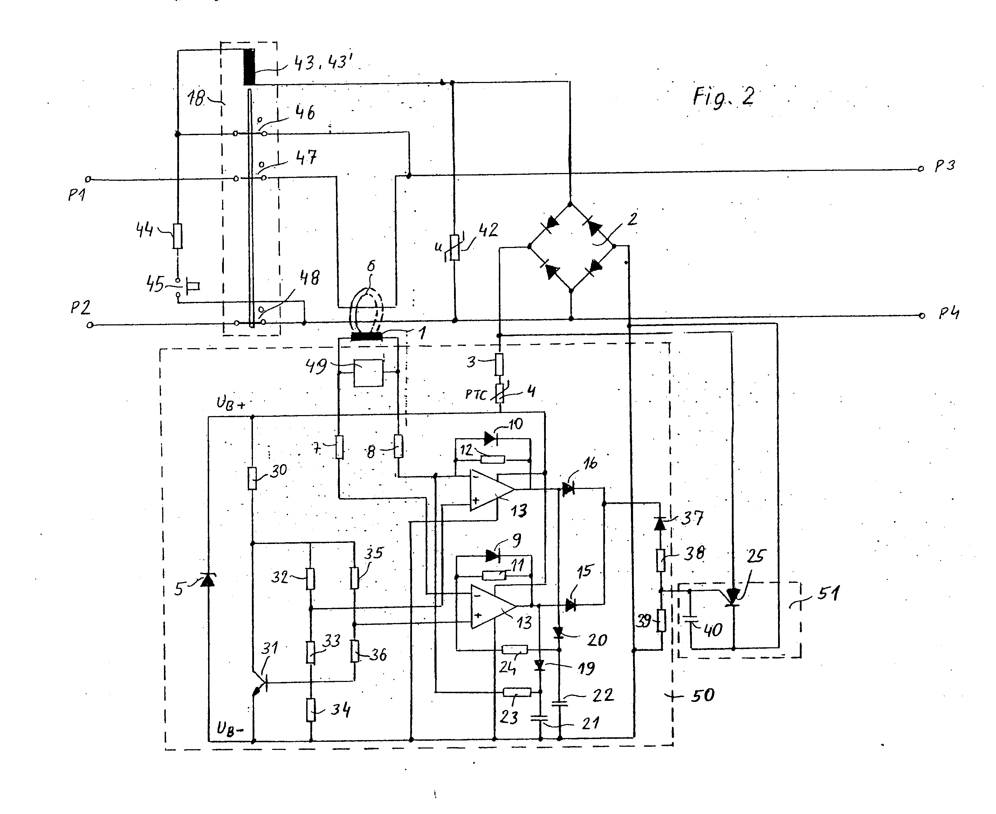

Fig. 2 zeigt einen Fehlerstromschutzschalter der gemäß der Erfindung aufgebaut ist, wobei die Auswerteschaltung 50, der Ansteuerschaltung 51 und der Netz-Schalteinrichtung 18 entsprechende Schaltungsteile strichliert umrahmt sind.

Der als Signalquelle dienende Summenstromwandler 6 bzw. dessen Sekundärwicklung 1, liefert seine Signale an die Auswerteschaltung 50, wobei an den Signaleingängen der Auswerteschaltung 50 eine Signalbegrenzungsschaltung 49 parallel angeschlossen ist, um die zu verarbeitenden Signale ihrer Amplitude nach zu begrenzen. Die an den Signaleingängen der Auswerteschaltung einlangenden Signale gelangen über die Widerstände 7, 8 zu je einem Verstärker 13 bzw. 14. Die Widerstände 7, 8 schützen die als Operationsverstärker ausgebildeten Verstärker 13, 14 und vereinfachen den Offsetabgleich. Ihr Wert ist aber so gering, daß die Rückwirkung auf den Wandler 6 klein ist. Da die Verstärker 13, 14 eine aus einer Diode 9, 10 und einem dazu parallel geschalteten Widerstand 11, 12 bestehenden Rückkopplung aufweisen ist die Wechselstromimpedanz gemessen zwischen den invertierenden Eingängen der Verstärker praktisch Null, sodaß ein niederohmiger Abschluß des Wandlers 6 erreicht wird, jedenfalls ein solcher, der nicht wesentlich größer als die Ausgangsimpedanz des Wandlers ist.

Die Rückkopplungen bewirken, daß das dem Fehlerstrom entsprechende Signal über die Widerstände 11, 12 fließen kann, wobei Spannungen mit entgegengesetzten Polaritäten an den Verstärkerausgängen auftreten und durch die Dioden 9, 10 ein Ansteuern der Ausgänge der Verstärker in negativer Richtung verhindert wird.

Damit kann die Verstärkerbezugsspannung an den nicht invertierenden Eingängen der Verstärker 13, 14 klein gehalten werden, ohne daß die Verstärkerendstufen in die Sättigung geraten können, sodaß diese in ihrem linearen Bereich bleiben und der Abschluß des Wandlers sehr niederohmig bleibt. Dabei sind die Verstärkerausgangssignale dem Fehlstrom proportional. Die Bezugsspannungen für die Verstärker 13, 14 werden vom Transistor 31 und dem dazugehörigen Widerstandsnetzwerk, das aus den Widerständen 30, 32, 35, 33, 36 und 34, besteht, auf bekannte Weise erzeugt. Der Widerstand 35 ist einstellbar, damit die Offsetspannungen von den Verstärkern 13, 14 kompensiert werden können. Die Bezugsspannung der Verstärker 13, 14 braucht dabei unter Umständen nur 1,5V betragen.

Die zwei Ausgangssignale von den Verstärkern 13,14 werden den als Diskriminator dienenden Dioden 15 und 16 zugeführt. Es erscheint somit das größere der zwei Signale an den Kathoden der Dioden 15 und 16. Wenn dieses Signal dann größer ist als die Durchbruchspannung der Zenerdiode 37, wird der Kondensator 40 über den Widerstand 38 aufgeladen und der Thyristor 25, der mit dem Kondensator 40 die Ansteuerschaltung 51 bildet wird gezündet. Der Widerstand dient dazu, die Empfindlichkeit des Thyristors 25 herabzusetzen, damit der nicht genau bekannte Zündstrom des Thyristors die Auslöseschwelle nicht beeinflussen kann. Das Zünden wird durch den Kondensator 40 verzögert, damit die Schaltung nicht auf kurzzeitige Störungen reagiert.

An jedem der Ausgänge der beiden Verstärker 13, 14 ist eine aus einer Diode 19 bzw. 20 und einem Kondensator 21 bzw. 22 bestehende Serienschaltung angeschlossen, die eine Verbindung zu einem festen Potential herstellt.Weiters sind die Kondensatoren 21, 22 bzw. die Dioden 19, 20 über die Widerstände 23, 24 mit den invertierenden Eingängen der Verstärker 13 und 14verbunden, wodurch sich eine Sperrschaltung für Störsignale ergibt, die z.B. durch kurze hohe Stromspitzen im Netz ausgelöst sind. So können z.B. durch Gewitter oder durch Schaltvorgänge sehr hohe Stromstöße in einem Netz auftreten, die auch zu Verzögerungen im Netz führen, die zu einer Auslösung der Schaltung bzw. zu einer Zündung des Thyristors 25 ausreichende Ausgangssignale des Wandlers 6 führen können.

Gemäß den gültigen Vorschriften soll ein Fehlerstromschutzschalter bei Stromstößen von 500A mit einer Anstiegszeit von 8 μs und einer Abfallzeit von 20 μs nicht auslösen. Solche Stromstöße führen aber dazu, daß an den Ausgängen der Sekundärseiten des Wandlers 1 Ausgangssignale mit einer für die jeweilige Phasenlage umgekehrten Polarität während des Abfalls des Stromstoßes für eine Dauer von ca. 3μs auftreten.

Die Auswerteschaltung 50 wird von der Gleichrichterbrücke 2 mit Gleichspannung versorgt, wobei zur Gewinnung der Versorgungsspannung $U_{B+}$, $U_B$ der beiden Verstärker 13, 14 eine aus dem Widerstand 3 und dem PTC-Widerstand 4 gebildete Serienschaltung sowie eine Spannungsbegrenzerschaltung, vorliegendenfalls eine Zenerdiode 5, vorgesehen ist, welche letztere die Versorgungsspannung auf einem vorgegebenen Wert hält. Durch die Anordnung des PTC-Widerstandes 4 ist es möglich den Fehlerstromschutzschalter ohne irgendwelche Änderungen für sehr unterschiedlich hohe Wechselspannungen z.B. von 50 bis 264 V einsetzen zu können. So bewirkt der bei einer höheren Spannung größere Stromfluß durch die Widerstandskombination 3,4 eine entsprechende Erwärmung des PTC-Widerstandes 4, sodaß sich dessen Widerstandswert erhöht wodurch der Stromfluß begrenzt wird und die Leistungsaufnahme vermindert wird.

An den Gleichspannungsausgängen der Gleichrichterbrücken ist weiters die Ansteuerschaltung 51 bzw. der Thyristor 25 angeschlossen. Wechselstromseitig ist die Gleichrichterbrücke über die als stromgesteuerte Steuerschaltung dienende Spule 43, die den Eisenkern 43′ des die Netz-

Schalteinrichtung 18 bildenden Auslöserelais umgibt, und den Hilfskontakt 46 des Auslöserelais an die Leitung P1-P3 und an die Leitung P2-P4 angeschlossen, wobei in diesen Leitungen noch die Hauptkontakte 47, 48 des Auslöserelais angeordnet sind.

Zum Schutz, gegen Überspannungen ist noch ein Varistor 42 vorgesehen, der paralell zu den Wechselspannungseingängen der Gleichrichterbrücke 2 oder in Serie zur Spule 43 des Auslöserelais geschaltet ist, sodaß gefährliche Überspannungen keinesfalls zu einem Ansprechen des Auslöserelais führen. Dabei begrenzt der Ohm'sche Widerstand der Spule 43 den durch den Varistor fließenden Strom.

Weiters ist noch ein aus dem Widerstand 44 und der Prüftaste 45 gebildeter Prüfkreis vorgesehen, mit dem ein durch den Widerstand 44 bestimmter Fehlerstrom hervorgerufen werden kann, der die Auswerteschaltung 50 zu Abgabe eines Auslösesignales an die Ansteuerschaltung 51 veranlaßt. In diesem Fall zündet der Thyristor 25, wodurch die Gleichrichterbrücke 2 ebenso wie bei Vorliegen eines auslösenden Summenstromwandlersignals gleichstromseitig praktisch kurzgeschlossen wird.

Da der gleichstromseitig fließende Strom wechselstromseitig in die Gleichrichterbrücke fließen muß, zieht diese einen entsprechenden Strom über die als Stromfühler dienende Spule 43, sodaß diese den Eisenkern voll erregt und die Kontakte 46, 47, 48 geöffnet und die Leitungen P1-P3 bzw. P2-P4 unterbrochen werden. Dabei ist noch eine nicht dargestellte Verriegelung vorgesehen, die den Anker des Auslöserelais in der angezogenen Stellung hält, sodaß die als Öffner ausgebildeten Kontakte 46, 47, 48 geöffnet bleiben. Dadurch wird aber die Versorgung der Gleichrichterbrücke unterbrochen und der Thyristor 25 kehrt in seinen gesperrten Zustand zurück.

Da die Versorgung der Gleichrichterbrücke 2 und damit auch der Auswerteschaltung 50 über den Kontakt 46 geführt ist können die Leitungen mit ihren Anschlüssen P1, P2 bzw. P3, P4 beliebig mit der Last oder dem Netz verbunden werden, sodaß bei der Montage des Fehlerstromschutzschalters darauf nicht geachtet zu werden braucht.

## Ansprüche

1. Schaltungsanordnung zur Steuerung einer Netz-Schalteinrichtung, vorzugsweise eines elektromagnetischen Schalters, wie z.B. eines Fehlerstromschutzschalters, wobei eine für die Netz-Schalteinrichtung vorgesehene Ansteuerschaltung von von einer über einen Gleichrichter mit Gleichstrom versorgten Auswerteschaltung erzeugten Signalen gesteuert ist, dadurch gekennzeichnet, daß die Netz-Schaltung (18) bzw. eine Steuerschaltung derselben in der Wechselstromanspeisung des Gleichrichters (2), der vorzugsweise als Gleichrichterbrücke ausgebildet ist, in Serie geschaltet ist und dessen Gleichstromkreis die Ansteuerschaltung (51) und die Auswerteschaltung (50) versorgt.

2. Schaltungsanordnung nach Anspruch 1, dadurch gekennzeichnet, daß die Steuerschaltung stromgesteuert ist.

3. Schaltungsanordnung nach Anspruch 1 und 2, dadurch gekennzeichnet, daß die Steuerschaltung durch die Spule (43) eines Kontakte (46, 47, 48) steuernden Elektromagneten (43') gebildet ist, wobei vorzugsweise einer dieser Kontrakt (46) in Serie zur Spule (43) geschaltet und als Öffner ausgebildet ist.

Fig. 1

0 233 444

Fig. 2

0 233 444

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 054 958 (BBC) <br> * Figur 1; Seite 2, Zeilen 10-25 * | 1-3 | H 02 H 3/33 <br> H 02 H 1/06 |
| X | US-A-3 852 642 (ENGEL et al.) <br> * Figuren 1,2; Spalte 3, Zeile 1 - Spalte 4 * | 1-3 | |
| X | GB-A-2 150 374 (ASHLEY) <br> * Figur 1; Seite 1, Zeile 119 - Seite 2, Zeile 28 * | 1-3 | |
| A | DE-A-2 838 716 (SATCHWELL) | | |

| RECHERCHIERTE SACHGEBIETE (Int. Cl.4) |
|---|
| H 02 H <br> H 02 P |

Der vorliegende Recherchenbericht wurde für alle Patentansprüche erstellt.

| Recherchenort | Abschlußdatum der Recherche | Prüfer |
|---|---|---|
| DEN HAAG | 03-10-1986 | KOLBE W.H. |